# EUROPÄISCHE PATENTANMELDUNG

(11) **EP 1 875 999 A2**
(43) Veröffentlichungstag der Anmeldung: **09.01.2008**
(21) Anmeldenummer: 07020772.5
(22) Anmeldetag: 08.08.2005
(51) Int. Cl.: B28C 5/42, F16D 3/00, F16H 1/48

(54) **Getriebe, insbesondere zum Antrieb einer Trommel eines Fahrmischers**

(30) Priorität: 07.08.2004 DE 102004038502
(62) Teilanmeldung aus: 05776993.7
(71) Anmelder: ZF Friedrichshafen AG, 88038 Friedrichshafen (DE)
(72) Erfinder: Heilig, Eduard, 88048 Friedrichshafen (DE)
(74) Vertreter: Gebhard, Wolfgang

(57) **Zusammenfassung**

Ein Getriebe zum Antrieb einer Trommel eines Fahrmischers gleicht die Relativbewegungen zwischen der Trommel und einem Fahrzeugrahmen des Fahrzeugs aus, indem Bauteile (3, 4, 11) so ausgeführt sind, dass diese im elastischen Bereich verformbar sind.

## Beschreibung

Die vorliegende Erfindung betrifft ein Getriebe, insbesondere zum Antrieb einer Trommel eines Fahrmischers, nach der im Oberbegriff von Anspruch 1 näher definierten Art.

Getriebe zum Antrieb einer Trommel eines Fahrmischers haben einerseits die Funktion, die Trommel in der Drehrichtung einziehen und in der Drehrichtung entleeren, anzutreiben und andererseits die Gewichtskraft der Trommel und deren Inhalts abzustützen. Hierbei ist es notwendig Relativbewegungen zwischen der Trommel und dem Fahrzeugrahmen des Fahrzeugs über das Getriebe auszugleichen, wobei insbesondere diese Bewegungen bei beladener Trommel und Fahrt des Fahrzeugs in unebenem Gelände auftreten.

Das US-Patent US 6,102,824 und das US-Patent US 3,658,303 offenbaren ein Getriebe zum Antrieb einer Mischtrommel, bei welchem ein Antriebsmotor über eine Planetenstufe einen Abtriebsflansch antreibt, welcher mit der Trommel in Verbindung steht, wobei zwischen einer Abtriebswelle und der Trommel eine sphärische Lagerung mit einer mittigen Bogenzahnkupplung angeordnet ist, welche die Relativbewegungen zwischen der Trommel und dem Fahrzeugrahmen ausgleicht und die Abtriebswelle über Kegelrollenlager drehbar, jedoch ortsfest, im Gehäuse des Mischergetriebes gelagert ist. Diese sphärische Lagerung in Verbindung mit der Bogenzahnkupplung unterliegt der Wartung und benötigt Bauraum zwischen dem Getriebe und der Trommel, welcher jedoch zwischen dem Fahrerhaus des Fahrzeugs und der Trommel nur begrenzt zur Verfügung steht.

Die DE 1 984 542 U offenbart ein Fahrmischergetriebe, bei welchem zwischen dem Abtriebsflansch und der Mischtrommel ein elastisches Element angeordnet ist.

Die DE 31 21 797 A1 offenbart ein Fahrmischergetriebe, welches über eine kardanische Aufhängung mit einem Lagerbock verbunden ist.

Die DE 23 41 250 A1 offenbart ein Fahrmischergetriebe, bei welchem der Abtriebsflansch über ein elastisches Element mit dem Hohlrad verbunden ist.

Die DE 100 33 661 A1 offenbart ein Fahrmischergetriebe, bei welchem das Getriebegehäuse über eine sphärische Lagerung mit dem Lagerbock verbunden ist.

Die US 200410037626 A1 offenbart ein mechanisches Verbindungselement von rotierenden Bauteilen, welches im elastischen Bereich verformbar ist, um den Bauteilen Freiheitsgrade zu ermöglichen.

Der vorliegenden Erfindung liegt die Aufgabe zugrunde, ein Getriebe, insbesondere zum Antrieb einer Trommel eines Fahrmischers zu schaffen, welches insbesondere in seiner Länge kompakt ausgeführt ist.

Die Aufgabe wird mit einem, auch die kennzeichnenden Merkmale des Hauptanspruchs aufweisenden gattungsgemäßen Getriebe gelöst.

Erfindungsgemäß wird der Ausgleich der Relativbewegung zwischen der Trommel und dem Fahrzeugrahmen dadurch gewährleistet, dass mindestens ein Bauteil des Getriebes so ausgebildet ist, dass es durch seine elastische Verformbarkeit diese Relativbewegungen ausführen kann, ohne sich hierbei plastisch zu verformen. Indem hierbei kein zusätzliches Bauteil benötigt wird, sondern ausschließlich durch die Gestaltung der vorhandenen Bauteile die Relativbewegung aufgenommen werden kann, kann das Getriebe, insbesondere in axialer Richtung kompakt ausgeführt werden.

In einer Ausgestaltungsform der Erfindung ist zwischen der Abtriebswelle und dem Abtriebsflansch des Getriebes mindestens ein Federelement angeordnet, welches die Bewegungen zwischen der Trommel und dem Fahrzeugrahmen aufnimmt und welches so einerseits mit der Abtriebswelle drehfest verbunden ist und andererseits so mit dem Abtriebsflansch drehfest verbunden ist, dass auch eine Drehmomentübertragung über dieses Element möglich ist.

In einer weiteren Ausgestaltungsform der Erfindung ist der Abtriebsflansch mit der Abtriebswelle einstückig ausgebildet, wobei die Lagerung der Abtriebswelle über ein sphärisches Lager, beispielsweise ein Pendelrollenlager oder ein sphärisch ausgebildetes Gleitlager erfolgt und die Abtriebswelle zwischen dem Lager und dem Untersetzungsgetriebe Ausnehmungen aufweist, durch welche diese Welle radial beweglich ausgeführt wird, jedoch das Drehmoment übertragen kann.

Durch die spezielle Ausbildung von Bauteilen des Getriebes, so dass diese Bauteile die Bewegungen zwischen der Trommel und dem Fahrzeugrahmen in ihrem elastischen Bereich ausgleichen können, ist es möglich, ohne zusätzliche Bauteile, alle Funktionen des Getriebes zu erfüllen, wobei das Getriebe, insbesondere in axialer Richtung, kompakt ausgeführt sein kann.

Weitere Merkmale sind der Figurenbeschreibung zu entnehmen.

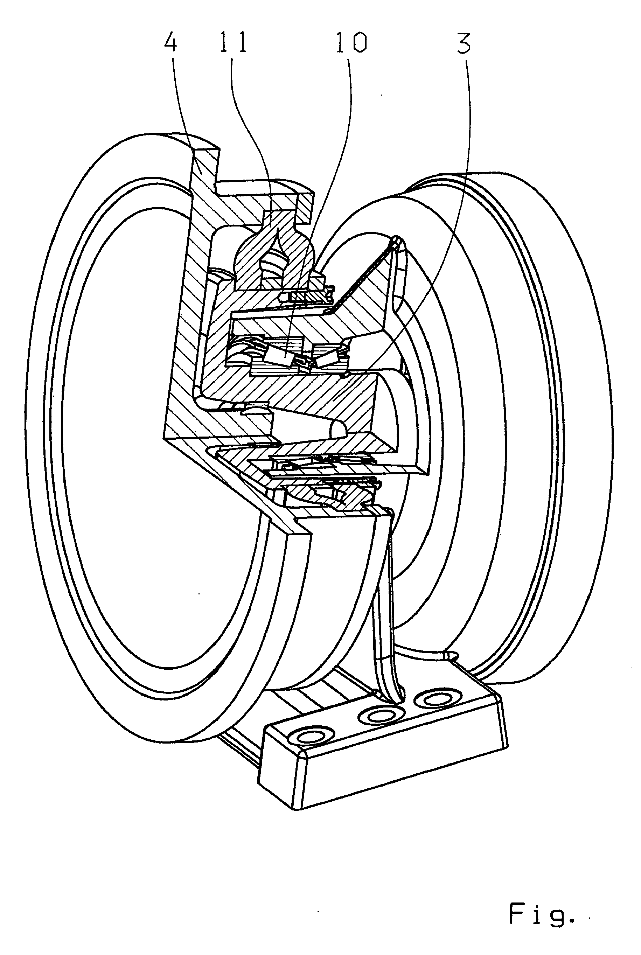

Die einzige Figur zeigt ein Getriebe zum Antrieb einer Mischtrommel mit einem elastisch ausgeführten Verbindungselement zwischen dem Abtriebsflansch und der Abtriebswelle.

Ein nicht gezeigter Antriebsmotor treibt über ein nicht gezeigtes Planetengetriebe eine Abtriebswelle 3 an, welche über eine Lagerung 10 im Gehäuse 6 gelagert ist. Die Lagerung 10 kann beispielsweise als Kegelrollenlagerung ausgeführt sein. Der Abtriebsflansch 4 ist einerseits mit einer nicht gezeigten Trommel des Fahrmischers verbunden und andererseits über ein Federelement 11 mit der Abtriebswelle 3 verbunden. Das Federelement 11 kann beispielsweise tellerfederartig ausgebildet sein, wobei es sich im elastischen Bereich so bewegen kann, dass Bewegungen der Trommel in Bezug auf den Fahrzeugrahmen ausgeglichen werden können. Das Federelement 11 ist einerseits mit dem Abtriebsflansch 4 kraft- oder formschlüssig verbunden und andererseits mit der Abtriebswelle 3 kraft- oder formschlüssig verbunden, um das Drehmoment von der Abtriebswelle 3 auf den Abtriebsflansch 4 zu übertragen.

### Bezugszeichen

- 3: Abtriebswelle
- 4: Abtriebsflansch
- 6: Gehäuse
- 10: Lagerung
- 11: Federelement

## Patentansprüche

1. Fahrmischergetriebe, zum Antrieb dessen Trommel, bei welchem ein Abtriebsflansch (4) drehfest mit der Trommel des Fahrmischers verbindbar ist und ein Gehäuse (6) des Getriebes ortsfest mit einem Fahrzeugrahmen des Fahrmischers in Verbindung bringbar ist und das Getriebe mindestens ein Bauteil (11) zum Ausgleich von Bewegungen zwischen dem Fahrzeugrahmen und der Trommel aufweist, wobei dieses Bauteil (11) im elastischen Bereich so verformbar ist, dass Bewegungen zwischen der Trommel und dem Fahrzeugrahmen ausgeglichen werden, **dadurch gekennzeichnet, dass** ein tellerfederartiges Federelement (11) zwischen der Abtriebswelle (3) und dem Abtriebsflansch (4) angeordnet ist, über welches das Drehmoment und die Gewichtskraft der Trommel übertragbar ist, wobei die Abtriebswelle (3) über eine Lagerung (10) im Gehäuse gelagert ist und die Lagerung radial innerhalb des Federelementes (11) angeordnet ist.
